# EUROPEAN PATENT APPLICATION

(11) **EP 2 314 856 A2**
(43) Date of publication of application: **27.04.2011**
(21) Application number: 10186479.1
(22) Date of filing: 05.10.2010
(51) Int. Cl.: F02M 31/125

(54) **Fuel tube and fuel tube contained automobile fuel pretreatment device**

(30) Priority: 07.10.2009 TW 098218445
(71) Applicant: Top 1 Green Development Co., Ltd., Taipei City 10483 (TW)
(72) Inventor: Poe, Jen-Chun, Cambridge CB1 1AH (GB)
(74) Representative: Horak, Michael

(57) **Abstract**

A fuel tube (31) includes a tube main body (310), a first tubular section (311), and a second tubular section (312). The tube main body (310) defines a heating chamber (316). The first tubular section (311) extends through one side of the tube main body (310) and includes a first fuel inlet opening (317) located outside the tube main body (310) and a first fuel outlet opening (318) located within the heating chamber (316). The second tubular section (312) extends through another side of the tube main body (310) that is opposite to the first tubular section (311) and includes a second fuel inlet opening (319) located within the heating chamber (316) and a second fuel outlet opening (320) located outside the tube main body (310). The tube main body (310), the first tubular section (311), and the second tubular section (312) collectively form a single Z-shaped path. As such, the flow path of fuel is effectively shortened and stable flow rate of fuel can be maintained.

## Description

### (a) Technical Field of the Invention

The present invention generally relates to a fuel tube and a fuel tube contained automobile fuel pretreatment device, and more particularly to a fuel tube and a fuel tube contained automobile fuel pretreatment device applicable for conducting fuel, such as gasoline and diesel, to flow therethrough.

### (b) Description of the Prior Art

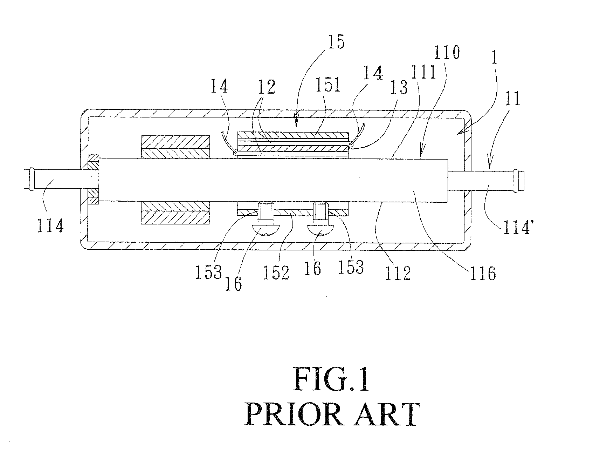

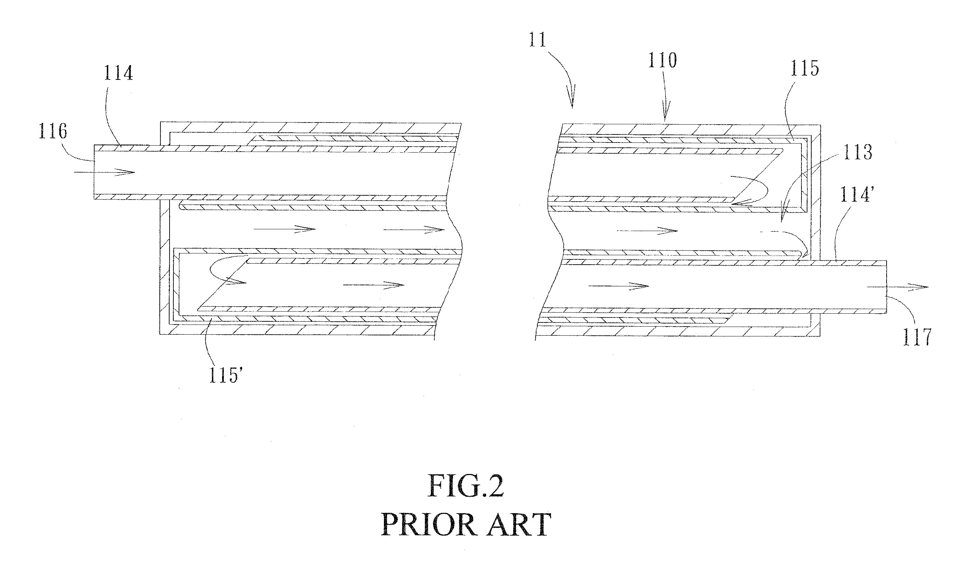

FIGS. 1 and 2 of the attached drawings show a high performance device for automobile fuel system disclosed in Taiwan Patent Publication No. 179347 (Application No. 80200363), in which an instantaneous constant-temperature heating device 1 comprises a fuel tube 11 having a first tubular section 110 that has a top surface 111 on which two plate electrodes 12 and an electric thermal ceramic element 13 interposed between the two plate electrodes 12 are positioned. The conductor wires 14 respectively supply electrical power to the two plate electrodes 12 for heating the electric thermal ceramic element 13, whereby the thermal energy generated by the electric thermal ceramic element 13 is transmitted to the first tubular section 110 of the fuel tube 11. The plate electrodes 12 and the electric thermal ceramic element 13 are retained on the first tubular section 110 by a clamp 15, which is fit over an outer circumference of the first tubular section 110. The clamp 15 has a top wall 151 positioned on the top surface of plate electrodes 12 and a bottom wall 152 forming a plurality of threaded holes 153 that receives bolts 16, whereby through clockwise rotation of the bolts 16, the bolts are caused to project beyond the bottom wall 152 and engage a bottom surface 112 of the first tubular section 110. Thus, the plate electrodes 12 and the electric thermal ceramic element 13 are securely held between the top wall 151 of the clamp 15 and the first tubular section 110.

The fuel tube 11 further comprises two second tubular sections 114, 114', which extend into the heating chamber 113 of the first tubular section 110 and two sleeves 115, 115' that are respectively fit over the second tubular sections 114, 114' and located within the heating chamber 113. The first tubular section 110, the two second tubular section 114, 114', and the two sleeves 115, 115' collectively form an arrangement of dual Z-shaped path as shown in FIG. 2, whereby fuel supplied from a gasoline pump (not shown) that flows through an inlet opening 116 of the second tubular section 114 impacts the sleeve 115, and then, flows in the directions indicated by arrows to get into the heating chamber 113. Afterwards, the fuel flows through the gap between the sleeve 115' and the second tubular section 114' to get into the second tubular section 114', and is finally discharged through an outlet opening 117 of the second tubular section 114'.

Since the dual Z-shaped path defined in the fuel tube 11 is of an excessive length, the gasoline pump must apply a great pumping force to effectively drive the fuel flowing through the fuel tube 11. This often leads to easy damage or malfunctioning of the gasoline pump and also requires an extended period of time of heating the fuel, making the efficiency of operation poor.

### SUMMARY OF THE INVENTION

An objective of the present invention is to provide a fuel tube, which provides a unique arrangement of single Z-shaped path to shorten the flow path for fuel and to maintain stable flow rate of fuel.

Another objective of the present invention is to provide a fuel tube contained automobile fuel pretreatment device, which comprises a fuel tube that is uniquely arranged in a single Z-shaped path to shorten the flow path for fuel and to maintain stable flow rate of fuel.

The objectives of the present invention and dissolution of the drawbacks of the conventional technology are achieved through the following technical solution, wherein a fuel tube constructed in accordance with the present invention comprises a tube main body, a first tubular section, and a second tubular section.

The tube main body defines a heating chamber. The first tubular section extends through one side of the tube main body and comprises a first fuel inlet opening located outside the tube main body and a first fuel outlet opening located within the heating chamber. The second tubular section extends through another side of the tube main body that is opposite to the first tubular section and comprises a second fuel inlet opening located within the heating chamber and a second fuel outlet opening located outside the tube main body The tube main body, the first tubular section, and the second tubular section collectively form a single Z-shaped path.

In the fuel tube described above, the tube main body comprises a first vertical wall, a second vertical wall opposing and spaced from the first vertical wall, and a circumferential wall connecting between the first and second vertical walls. The first tubular section extends through the first vertical wall in such a way that the first fuel outlet opening faces the second vertical wall. The second tubular section extends through the second vertical wall in such a way that the second fuel inlet opening faces the first vertical wall.

Preferably, the tube main body is a rectangular tube and the first and second tubular sections are circular tubes.

In another aspect of the present invention, a fuel tube contained automobile fuel pretreatment device is provided, comprising an instantaneous constant-temperature heating device and a magnetization combustion-enhancing device. The instantaneous constant-temperature heating device comprises a fuel tube which allows fuel to flow therethrough, a heating unit, and a retention unit. The fuel tube comprises a tube main body, a first tubular section, and a second tubular section. The tube main body defines a heating chamber. The first tubular section extends through one side of the tube main body and comprises a first fuel inlet opening located outside the tube main body and a first fuel outlet opening located within the heating chamber. The second tubular section extends through another side of the tube main body that is opposite to the first tubular section and comprises a second fuel inlet opening located within the heating chamber and a second fuel outlet opening located outside the tube main body. The tube main body, the first tubular section, and the second tubular section collectively form a single Z-shaped path. The heating unit comprises at least two plate electrodes arranged on an outside surface of the tube main body, at least one electric thermal ceramic element interposed between the two plate electrodes, at least one insulation sheet wrapping around the two plate electrodes and the electric thermal ceramic element, and two power cables respectively supplying electrical current to the two plate electrodes. The two plate electrodes transmit the electrical current to the electric thermal ceramic element for heating the tube main body The retention unit encloses and clamps an insulation assembly formed of the insulation sheet wrapping the two plate electrodes and the electric thermal ceramic element on the tube main body The magnetization combustion-enhancing device comprises at least one permanent magnet that is located adjacent to an outside surface of the tube main body to induce magnetization on the fuel flowing through the tube main body.

With the above described technical solution, the fuel tube constructed in accordance with the present invention is advantageous in that through a unique arrangement of single Z-shaped path inside the fuel tube, the fuel path is shortened and stable flow rate of the fuel can be maintained.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG. 1 is a cross-sectional view showing a known device disclosed in Taiwan Patent Publication No. 179347.
FIG. 2 is a cross-sectional view showing a conventional fuel tube disclosed in Taiwan Patent Publication No. 179347.
FIG. 3 is a perspective view showing a fuel tube contained automobile fuel pretreatment device according to a preferred embodiment of the present invention, illustrating the automobile fuel pretreatment device is mounted inside an enclosure.
FIG. 4 is an exploded view of the fuel tube contained automobile fuel pretreatment device according to the preferred embodiment of the present invention, illustrating spatial relationship between an instantaneous constant-temperature heating device and a magnetization combustion-enhancing device and structural arrangements thereof.
FIG. 5 is an exploded view of the fuel tube contained automobile fuel pretreatment device according to the preferred embodiment of the present invention, illustrating spatial relationship between an instantaneous constant-temperature heating device and a magnetization combustion-enhancing device and structural arrangements thereof.
FIG. 6 is a cross-sectional view taken along line 6-6 of FIG. 4, illustrating a tube main body and first and second tubular sections of the fuel tube collectively forming a single Z-shaped path and a flowing path of fuel.
FIG. 7 is a cross-sectional view of the fuel tube contained automobile fuel pretreatment device according to the preferred embodiment of the present invention, illustrating two spring clamp boards enclosing and tightly clamping a pair of plate electrodes and an electric thermal ceramic element wrapped by an insulation sheet and positioned on the tube main body.
FIG. 8 is a cross-sectional view of the fuel tube contained automobile fuel pretreatment device according to the preferred embodiment of the present invention, illustrating permanent magnets of the magnetization combustion-enhancing device received and held in receptacles and retained through magnetic attraction on first-layer and second-layer clips at locations adjacent to the tube main body.
FIG. 9 is a cross-sectional view taken along line 9-9 of FIG. 8, illustrating the permanent magnets retained through magnetic attraction on a jointing interface between two first-layer clips.
FIG. 10 is a cross-sectional view of the fuel tube contained automobile fuel pretreatment device according to a modification of the preferred embodiment of the present invention, illustrating the permanent magnets of the magnetization combustion-enhancing device engaging and supported by positioning bumps of the first-layer clips and retained through magnetic attraction on the first-layer clips at locations adjacent to the tube main body.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

It is first noted in the following description, similar parts/components are designated with the same reference numerals as indicted in the drawings attached herewith.

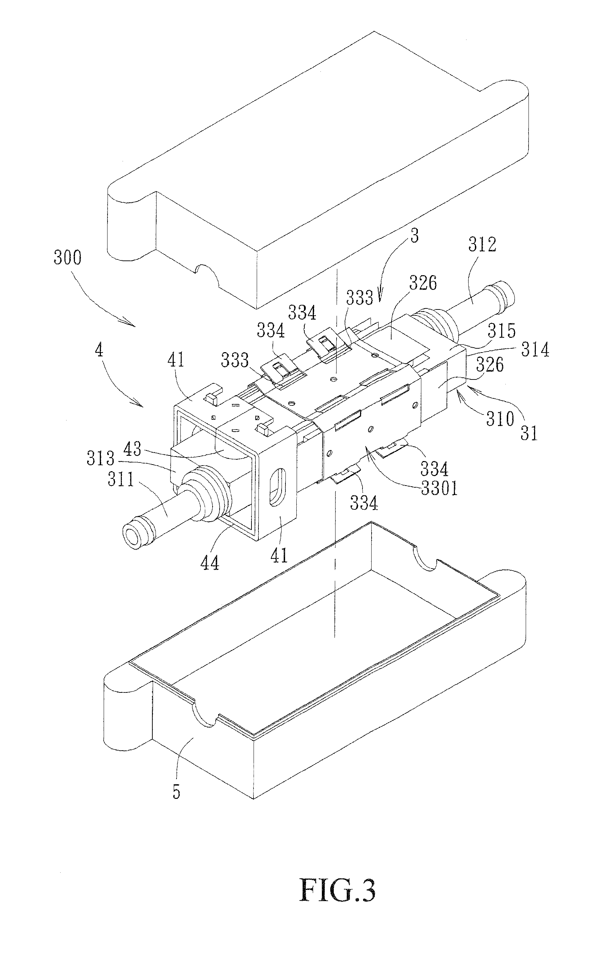

As shown in FIG. 3, a fuel tube contained automobile fuel pretreatment device according to a preferred embodiment of the present invention is illustrated. The automobile fuel pretreatment device, generally designated at 300, is applicable to a gasoline carburetor base engine fuel system (not shown) by being arranged behind a gasoline filter and a gasoline pump and connected between the gasoline pump and a carburetor. When the automobile engine is started, the automobile fuel pretreatment device 300 shows the characteristics of helping realizing continuous and complete combustion of fuel in an instantaneous fashion, wherein through conversion of cold fuel combustion rate of cold fuel into explosive combustion rate of hot fuel, the incompletely-combusted fuel-air mixture, which is of high pollution and was conventionally subjected to secondary, cleaning-purpose combustion in a catalytic converter, is now completely combusted just through the primary, in-cylinder combustion. Consequently, output horsepower is enhanced and an engine behavior of low rotational speed and high torque, similar to that of a diesel engine, can be realized. Apparently, for practical applications, the automobile fuel pretreatment device 300 is also applicable to fuel injection engine fuel system or diesel engine fuel system.

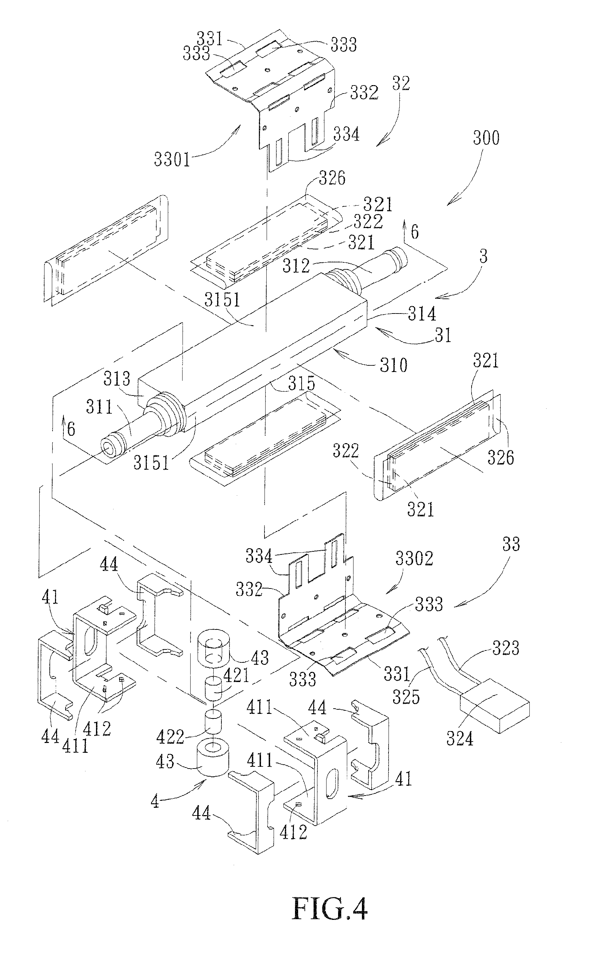

As shown in FIGS. 4, 5, and 6, the automobile fuel pretreatment device 300 comprises an instantaneous constant-temperature heating device 3, and a magnetization combustion-enhancing device 4 that is mounted to the instantaneous constant-temperature heating device 3 and arranged to be substantially parallel thereto. The instantaneous constant-temperature heating device 3 comprises a fuel tube 31 connected between the gasoline pump and the carburetor to allow fuel to flow therethrough. The fuel tube 31 is made of for example red brass, which is of excellent thermal conductivity and shows a safety nature of generating no spark when impacted by fuel.

The fuel tube 31 comprises a tube main body 310, a first tubular section 311, and a second tubular section 312. The tube main body 310 has a first vertical wall 313, a second vertical wall 314 that opposes and is spaced from the first vertical wall 313, and a circumferential wall 315 connecting between the first and second vertical walls 313, 314. The first and second vertical walls 313, 314 and the circumferential wall 315 collectively define a heating chamber 316 for heating fuel therein. The first tubular section 311 is arranged to extend through the first vertical wall 313, and the first tubular section 311 has a first fuel inlet opening 317 located outside the tube main body 310 and a first fuel outlet opening 318 located inside the heating chamber 316 of the tube main body 310 and facing the second vertical wall 314. Fuel supplied from the gasoline pump is allowed to flow through the first fuel inlet opening 317 into the first tubular section 311 and then through the first fuel outlet opening 318 to enter the heating chamber 316. The second tubular section 312 is arranged to extend through the second vertical wall 314, and the second tubular section 312 has a second fuel inlet opening 319 that is located inside the heating chamber 316 of the tube main body 310 and faces the first vertical wall 313 and a second fuel outlet opening 320 located outside the tube main body 310. Fuel is allowed to flow from the heating chamber 316 through the second fuel inlet opening 319 into the second tubular section 312 and further through the second fuel outlet opening 320 to flow to the carburetor. In the instant embodiment, the tube main body 310 is in the form of a rectangular tube, while the first and second tubular sections 311, 312 are circular tubes. The tube main body 310, the first tubular section 311, and the second tubular section 312 collectively form a single Z-shaped passage.

The instantaneous constant-temperature heating device 3 further comprises a heating unit 32 for heating the tube main body 310 of the fuel tube 31. The heating unit 32 comprises a plurality of pairs of plate electrodes 321 and a plurality of electric thermal ceramic elements 322. Each pair of plate electrodes 321 is positioned on each outside surface 3151 of the circumferential wall 315 of the tube main body 310 and each electric thermal ceramic element 322 is a precision electric thermal ceramic element interposed between each pair of plate electrodes 321. The heating unit 32 has a positive electrode power cable 323 that is connected between one of the plate electrodes 321 of each pair and a power supply unit 324 for conducting positive electrode current and a negative electrode power cable 325 connected between another one of the plate electrodes 321 of each pair and the power supply unit 324 for conducting negative electrode current. As such, the power cables 323, 325 transmit electrical current supplied from the power supply unit 324 to each pair of plate electrodes 321, whereby each pair of plate electrodes 321 transmits the electrical current to the electric thermal ceramic element 322 interposed therebetween in order to make the electric thermal ceramic element 322 heating the tube main body 310 of the fuel tube 31 and thus converting the cold fuel supplied from the gasoline pump, through heating applied by the fuel tube 31, into an ionized condition and completely and uniformly heated fuel to be further supplied to the carburetor.

When an automobile is operating at a high speed, the amount of fuel flowing through the fuel tube 31 is increased. Through the arrangement of multiple sets of electric thermal ceramic element 322 to simultaneously heat the tube main body 310, the fuel flowing through the fuel tube 31 can be instantaneously heated to a predetermined high temperature, which shortens the time period required for heating and improves the temperature and efficiency realized for the heating operation, whereby the fuel flowing through the fuel tube 31 can be completely heated to realize uniform result of heating. Further, due to the natural characteristics of the electric thermal ceramic element 322, when the automobile switches from high speed operation to low speed operation and the fuel is over-heated to an excessively high temperature beyond a predetermined limit, the electrical resistance of the electric thermal ceramic element 322 becomes infinite, reducing the electrical current flowing into the electric thermal ceramic element 322 so as to stop the heating operation; when the fuel temperature drops to a temperature lower than a predetermined limit, the electrical resistance of the electric thermal ceramic element 322 automatically lowers to allow an increase of electrical current for subsequently performing heating operation to thereby realize an operation of constant temperature heating.

Preferably, the heating unit 32 according to the instant embodiment further comprises a plurality of insulation sheets 326. Each insulation sheet 326 wraps around each pair of plate electrodes 321 and the electric thermal ceramic element 322 interposed therebetween in such a way that a portion of the insulation sheet 326 is located between one of the plate electrodes 321 and the respective outside surface 3151 of the tube main body 310, while another portion of the insulation sheet covers an outside surface of another one of the plate electrodes 321. As such, conduction of electrical current from the plate electrodes 321 to the tube main body 310 is prevented. This prevents direct contact with the plate electrodes 321 and also prevents the plate electrodes 321 from directly transmitting electrical current to a retention unit 33 of the instantaneous constant-temperature heating device 3, so as to help improving operation safety of the automobile fuel pretreatment device 300.

As shown in FIGS. 4, 5, and 6, to position and retain each pair of plate electrodes 321 and the electric thermal ceramic element 322 interposed therebetween, as well as the insulation sheet 326 wrapping around the plate electrodes on the tube main body 310, the retention unit 33 of the instantaneous constant-temperature heating device 3 comprises two spring clamp boards 3301, 3302. The two spring clamp boards 3301, 3302 are of identical structure and material, so that only the spring clamp board 3301 will be described herein, but the description is certainly applicable to the spring clamp board 3302. The spring clamp boards 3301 is made of a metallic material and is of an L-shape. In the instant embodiment, the spring clamp boards 3301 is made of steel and has an inclined first free end 331, a second free end 332, two locking holes 333 adjacent to the first free end 331, and two locking tabs 334 projecting from the second free end 332.

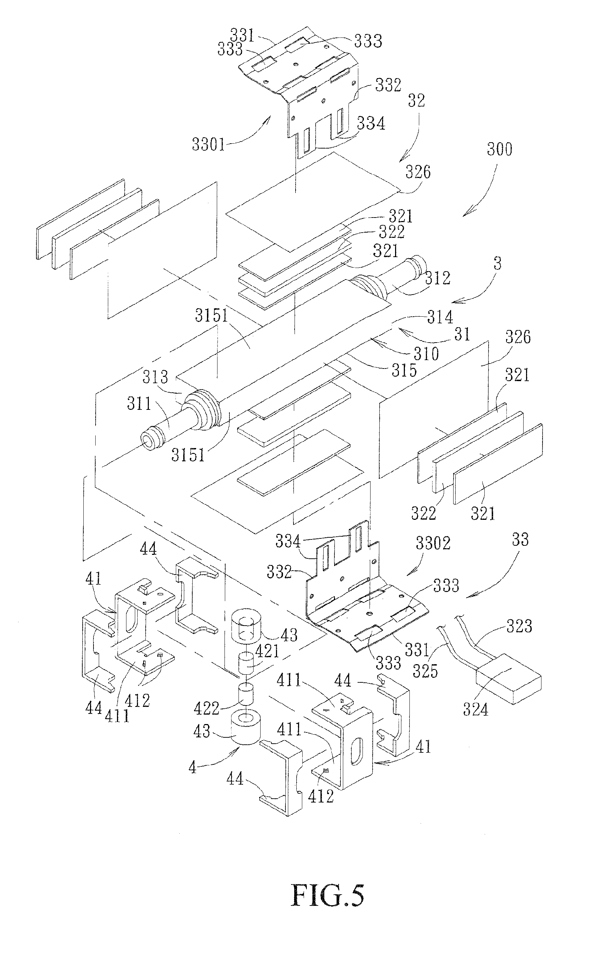

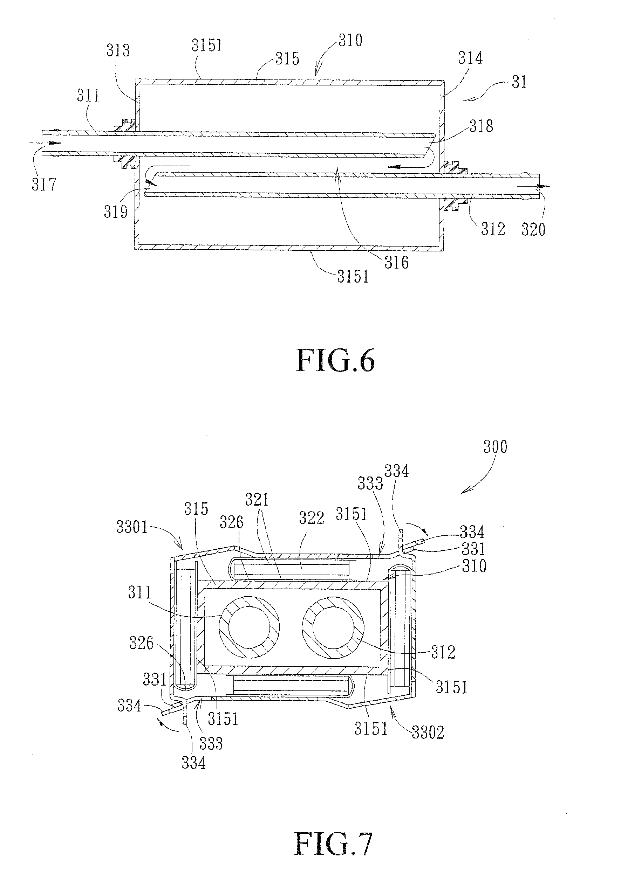

As shown in FIGS. 5 and 7, to assemble the two spring clamp boards 3301, 3302 to clamp and enclose each pair of plate electrodes 321, the electric thermal ceramic element 322, and the insulation sheet 326, the locking tabs 334 of one of the spring clamp boards, such as the spring clamp board 3301, are put into the locking holes 333 formed in the other one of the spring clamp boards, such as the spring clamp board 3302, and at the same time, the locking tabs 334 of said other one of the spring clamp boards, namely the spring clamp board 3302, are put into the locking holes of said one of the spring clamp boards, namely the spring clamp board 3301. With the two spring clamp boards 3301, 3302 being tightly held against the insulation sheets 326, the locking tabs 334 are folded as indicated by the arrows of FIG. 7 so as to bend outward and engage the first free end 331. This completes the assembling of the two spring clamp boards 3301, 3302 so that the two spring clamp boards 3301, 3302 enclose and tightly clamp the pairs of plate electrodes 321, the electric thermal ceramic elements 322, and the insulation sheets 326 on the tube main body 310 thereby properly positioning the plate electrodes 321, the electric thermal ceramic elements 322, and the insulation sheets 326 on the tube main body 310 without undesired shifting and shaking. Apparently, it is also feasible to change the numbers of the locking holes 333 and the locking tabs 334 that are formed on each spring clamp board 3301, 3302 to be one or more than two and this provides the same effect of clamping even under the condition of thermal expansion of the fuel tube 31.

As shown in FIGS. 5, 8, and 9, the magnetization combustion-enhancing device 4 comprises two U-shaped first-layer clips 41 having openings facing each other and two permanent magnets 421, 422. The two first-layer clips 41 are jointed to each other to form a circumferentially enclosing configuration, which positions the two permanent magnets 421, 422 at opposite upper and lower sides, whereby lines of magnetic force of the permanent magnets 421, 422 are conducted to flow within the two first-layer clips 41 without leakage. Preferably, the magnetization combustion-enhancing device 4 further comprises two bowl-shaped receptacles 43 for respectively receiving and retaining the permanent magnets 421, 422. The two first-layer clips 41 engage and hold the two receptacles 43 at the opposite upper and lower sides. Through the bowl-shaped receptacles 43 having openings facing each other, the lines of magnetic force of the permanent magnets 421, 422 are strengthened and leakage is better prevented, these helping preventing deterioration of the lines of magnetic force of the permanent magnets 421, 422. Since the two first-layer clips 41 are of identical structure and material, the following description is made only with respect to one first-layer clip 41 but is apparently applicable to the other first-layer clip 4. The first-layer clip 41 is made of a metallic material and is set around an outer circumference of the tube main body 310 and retained inside an enclosure 5 (see FIG. 3). In the instant embodiment, the first-layer clips 41 are made of a soft iron material. The first-layer clip 41 has two opposing side walls 411, each having an inside surface forming two raised positioning bumps 412, which are spaced from each other and function to engage and retain the respective one of the receptacles 43. Each receptacle 43 has a half portion projecting beyond an opening of the first-layer clip 41 defined between the free ends of the side walls. As such, the receptacle 43 is engageable with and positionable between the positioning bumps 412 of the two first-layer clips 41 so as to constrain each of the receptacles 43 at a location corresponding to a jointing interface between the two first-layer clips 41, whereby the two permanent magnets 421, 422 held in the receptacles 43 are respectively located at the opposite upper and lower sides and correspond in position to each other and with the magnetic attraction induced by the permanent magnets 421, 422, the two first-layer clips 41 are attractively held together.

To improve the path along which the lines of magnetic force of the permanent magnets 421, 422 flow, in the instant embodiment, the magnetization combustion-enhancing device 4 are arranged to further comprises two pairs of second-layer clips 44 for being respectively set on opposite sides of the receptacles 43. The second-layer clips 44 are of the same material as that of the first-layer clips 41 and also have an outer shape similar to the first-layer clips 41. The second-layer clips 44 are of a cross-sectional size smaller than the first-layer clips 41 but can be positioned against and stacked under inside surfaces of the first-layer clips 41. The second-layer clips 44 have a width that is about half of the width of the first-layer clips 41, whereby the two pairs of the second-layer clips 44 can be positioned against outside surfaces of the two receptacles 43 at the opposite sides thereof so as to double the path through which the lines of magnetic force of the permanent magnets 421, 422 flow, allowing the lines of magnetic force to fast flow along the first-layer and second-layer clips 41, 44 and effectively improving the magnitude of the magnetic attraction and extending the time of use.

To assemble the first-layer and second-layer clips 41, 44, the receptacles 43, and the permanent magnets 421, 422 to the tube main body 310, the two second-layer clips 44 of each pair are positioned on the inside surfaces of each of the first-layer clips 41, and the permanent magnets 421, 422 are deposited into the two receptacles 43. Since the receptacles 43 are similarly made of soft iron materials, the permanent magnets 421, 422 can be attractively attached, through the receptacles 43, to the inside surfaces of the side walls 411 of one of the first-layer clips 41 with the receptacles 43 engaging and being held by the positioning bumps 412 of the side walls 411. Under this condition, one pair of second-layer clips 44 is located to position against outside surfaces of the receptacles 43.

Next, the two side walls 411 of the first-layer clip 41 are moved to be respectively positioned above and below the tube main body 310 to have the permanent magnets 421, 422 located adjacent to the outside surfaces 3151 of the tube main body 310 in order to induce magnetic attraction to the tube main body 310. Afterwards, another first-layer clip 41 is positioned to have the side walls 411 thereof jointing to the side walls 411 of the previous first-layer clips 41 with the receptacles 43 engaging and supported by the positioning bumps 412 of said another first-layer clip 41 and the permanent magnets 421, 422 magnetically attracting and holding said another first-layer clip 41 and another pair of second-layer clips 44. In other words, each of the permanent magnets 42 is set between and magnetically attracts the positioning bumps 412 of the two first-layer clips 41 and between the two pairs of second-layer clips 44. Under this condition, the two first-layer clips 41 and the two pairs of second-layer clips 44 are positioned around and circumferentially enclose the outside circumference of the tube main body 310. It is noted that although two pairs of second-layer clips 44 are used as an example for illustrating the present invention, in practical applications, if the second-layer clips 44 are configured to have a width corresponding to that of the first-layer clips 41, then only two second-layer clips 44 are needed.

When fuel flows through the fuel tube 31 and passes between the two permanent magnets 421, 422, the magnetism of the permanent magnets 421, 422 minimizes the cohesion force and adhesion force of water molecules, fuel molecules, and impurities to a low extreme level and showing an ionized condition, to ensure continue and stable effectiveness of purification and combustion enhancement of fuel to eventually realize the goal of improving the mist condition of fuel for complete combustion. With the first-layer and second-layer clips 41, 44 being magnetically attracted and held together by the permanent magnets 421, 422 to form a circumferential enclosing configuration, the lines of magnetic force of the permanent magnets 421, 422 can flow within and along the first-layer and second-layer clips 41, 44 without easy leakage, so as to extend the time of use of magnetic forces. Further, with the multiple flow path arrangement for lines of magnetic force, the magnitudes of magnetic force and the penetration depth of magnetization can both be improved.

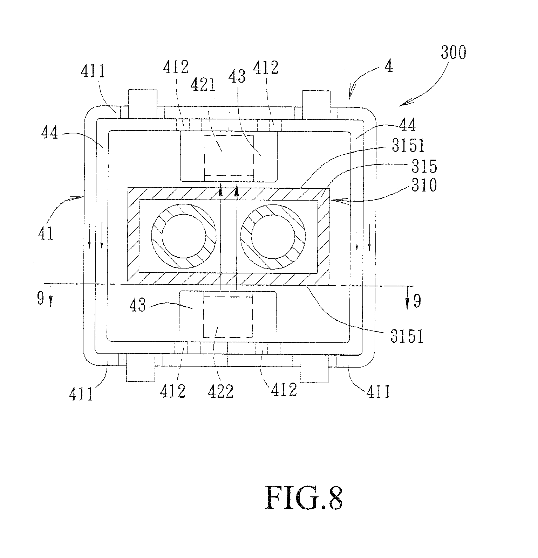

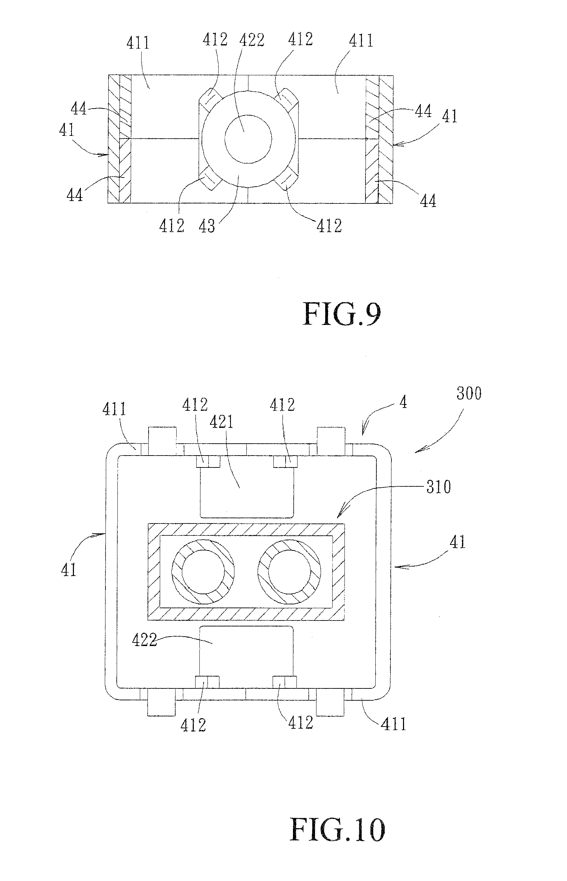

It is noted that an alternative feasible arrangement of the magnetization combustion-enhancing device 4, as shown in FIG. 10, comprises only the first-layer clips 41, but accomplish the same effectiveness of enhancing the result of magnetization and extending the time of use. However, it is apparent that the multiple clip arrangement for flow path of lines of magnetic force is more effective in achieving the optimum result of magnetization and extension of time of use. Further, as shown in FIG. 10, the receptacles 43 can be omitted, but the size and shape of the permanent magnets 421, 422 must be made so as to resemble the receptacles 43 shown in FIG. 8, in order to have the permanent magnets 421, 422 engaging and supported between the positioning bumps 412 of the two first-layer clips 41 and the two permanent magnets 421, 422 be positioned, through magnetic attraction, on the inside surfaces of the first-layer clips 41 and located adjacent to the outside surfaces 3151 of the tube main body 310.

The operation of the automobile fuel pretreatment device 300 will be described as follows.

As shown in FIGS. 6, 7, and 8, when the automobile is turned on, through the pumping force generated by the gasoline pump, the fuel is driven to flow through the first fuel inlet opening 317 into the first tubular section 311, and then ejects through the first fuel outlet opening 318 to impact the second vertical wall 314 of the tube main body 310. The fuel, when flowing through the first tubular section 311, is subjected to the magnetization induced by the permanent magnets 421, 422 of the magnetization combustion-enhancing device 4 and thus ionized and absorbing heat. When the fuel impacts the second vertical wall 314, the fuel molecules are broken into minute particles of even smaller sizes, which start to turn and roll, causing the minute particles to carry negative electricity on a surface layer thereof but carrying positive electricity on a core thereof to realize ionization of even finer condition. The fuel flows into the heating chamber 316 of the tube main body 310. With electric thermal ceramic elements 322 heating the tube main body 310, the ionized fuel molecules of minute particle sizes that are rotating and rolling and colliding each other are efficiently and uniformly absorbing thermal energy to realize a uniform result of heating. Afterwards, the fuel molecules of minute particle sizes flow through the second fuel inlet opening 319 into the second tubular section 312 that conducts outward the fuel and are subjected to compression therein, whereby the uniformly heated fuel molecules are fast conducted through the second fuel outlet opening 320 into the carburetor. Since in the instant embodiment, a plurality of electric thermal ceramic elements 322 is used to simultaneously heat the tube main body 310 of the fuel tube 31, in combination with the magnetization induced by the magnetization combustion-enhancing device 4 to minimize the cohesion force and the adhesion force of the water molecules, fuel molecules, and impurities contained in the fuel to a lower limit and in an ionized form, the fuel molecules of minute particle sizes contained in the fuel can be efficiently and uniformly heated to a desired temperature. As such, the optimum condition of mist can be realized and complete combustion can be done in a period of seven ten-thousandth seconds. Since the instant embodiment employs a plurality of electric thermal ceramic elements 322 to heat the tube main body 310 of the fuel tube 31, the fuel can be efficiently heated to a desired temperature. Further, the tube main body 310 and the first and second tubular sections 311, 312 of the fuel tube 31 collectively form an unique arrangement of single Z-shaped path (as shown in FIG. 6), which shortens the path through which the fuel must flow and thus effectively improves the efficiency of operation, and also allows the gasoline pump to supply a reduced pumping force for driving the fuel through the fuel tube 31, so that the potential risk of damage or malfunction of the gasoline pump over an excessively long period of operation is reduced.

It is further noted that fuel that flows through a conventional straightforward linear fuel tube is not broken, due to impact, into fuel particles for subsequent rotating and rolling, so that the result of heating on the molecules of the fuel is such that outside portions of the fuel are of high temperature, but the core portion is of low temperature, making it not possible to achieve instantaneous, simultaneous and uniform heating. Further, the dual Z-shaped path suggested in the prior art reference is incapable of providing a sufficient space for fuel impacting and rotating and rolling, so that it is of poor performance of heating. The fuel tube 31 according to the present invention adopts an arrangement of single Z-shape, which when compared to the prior art, is capable of significantly improving heating performance and achieving instantaneous and uniform heating result.

Further, inspection of the exhaust gas discharged from an automobile equipped with the automobile fuel pretreatment device 300 according to the present invention shows that the levels of discharged CO and HC are both lower than the stipulated requirements, and even approaching zero, and the level of discharged CO₂ is much higher than the stipulated standard. As such, an effect of reducing air pollution can be realized. An automobile fuel pretreatment device that does not adopt the unique arrangement of Z-shaped path of fuel tube 31 is incapable of reducing the level of pollution.

In summary, the automobile fuel pretreatment device 300 according to the instant embodiment arranges the fuel tube 31 in a unique single Z-shaped path to shorten the flow path of fuel and also maintain stable flow rate. Further, through combination with a plurality of electric thermal ceramic elements 322 for heating the tube main body 310 of the fuel tube 31, excellent heating can be accomplished regardless of the amount of fuel supplied, so as to efficiently heat the fuel to a desired temperature, improving the heating efficiency of fuel and actually achieving the goals of the present invention.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A fuel tube (31), comprising:
a tube main body (310), which defines a heating chamber (316);
a first tubular section (311), which extends through one side of the tube main body (310) and comprises a first fuel inlet opening (317) located outside the tube main body (310) and a first fuel outlet opening (318) located within the heating chamber (316); and
a second tubular section (312), which extends through another side of the tube main body (310) that is opposite to the first tubular section (311) and comprises a second fuel inlet opening (319) located within the heating chamber (316) and a second fuel outlet opening (320) located outside the tube main body (310), the tube main body (310), the first tubular section (311), and the second tubular section (312) collectively forming a single Z-shaped path.

2. The fuel tube (31) according to claim 1, wherein the tube main body (310) comprises a first vertical wall (313), a second vertical wall (314) opposing and spaced from the first vertical wall (313), and a circumferential wall (315) connecting between the first and second vertical walls (313, 314), the first tubular section (310) extending through the first vertical wall (313) in such a way that the first fuel outlet opening (317) faces the second vertical wall (314).

3. The fuel tube (31) according to claim 2, wherein the second tubular section (312) extends through the second vertical wall (314) in such a way that the second fuel inlet opening (319) faces the first vertical wall (313).

4. The fuel tube (31) according to claim 3, wherein the tube main body (310) is a rectangular tube and the first and second tubular sections (311, 312) are circular tubes.

5. A fuel tube contained automobile fuel pretreatment device (300), comprising:
an instantaneous constant-temperature heating device (3), which comprises:
a fuel tube (31) which is adapted to allow fuel to flow therethrough and comprises a tube main body (310), a first tubular section (311), and a second tubular section (312), the tube main body (310) defining a heating chamber (316), the first tubular section (311) extending through one side of the tube main body (310) and comprising a first fuel inlet opening (317) located outside the tube main body (310) and a first fuel outlet opening (318) located within the heating chamber (316), the second tubular section (312) extending through another side of the tube main body (10) that is opposite to the first tubular section (311) and comprising a second fuel inlet opening (319) located within the heating chamber (316) and a second fuel outlet opening (320) located outside the tube main body (310), the tube main body (310), the first tubular section (311), and the second tubular section (312) collectively forming a single Z-shaped path,
a heating unit (32), which comprises at least two plate electrodes (321) arranged on an outside surface (3151) of the tube main body (310), at least one electric thermal ceramic element (322) interposed between the two plate electrodes (321), at least one insulation sheet (326) wrapping around the two plate electrodes (321) and the electric thermal ceramic element (322), and two power cables (323, 325) respectively supplying electrical current to the two plate electrodes (321), the two plate electrodes (321) transmitting the electrical current to the electric thermal ceramic element (322) for heating the tube main body (310), and
a retention unit (33), which encloses and clamps an insulation assembly formed of the insulation sheet (326) wrapping the two plate electrodes (321) and the electric thermal ceramic element (322) on the tube main body (310);
and
a magnetization combustion-enhancing device (4), which comprises at least one permanent magnet (421, 422) that is located adjacent to an outside surface (3151) of the tube main body (310) to induce magnetization on the fuel flowing through the tube main body (310).

6. The fuel tube contained automobile fuel pretreatment device (300) according to claim 5, wherein the tube main body (310) comprises a first vertical wall (313), a second vertical wall (314) opposing and spaced from the first vertical wall (313), and a circumferential wall (315) connecting between the first and second vertical walls (313, 314), the first tubular section (311) extending through the first vertical wall (313) in such a way that the first fuel outlet opening (317) faces the second vertical wall (314).

7. The fuel tube contained automobile fuel pretreatment device (300) according to claim 6, wherein the second tubular section (312) extends through the second vertical wall (314) in such a way that the second fuel inlet opening (319) faces the first vertical wall (313).

8. The fuel tube contained automobile fuel pretreatment device (300) according to claim 7, wherein the tube main body (310) is a rectangular tube and the first and second tubular sections (311, 312) are circular tubes.

9. The fuel tube contained automobile fuel pretreatment device (300) according to claim 8, wherein the heating unit (32) comprises a plurality of pairs of plate electrodes (321) respectively arranged on outside surfaces (3151) of the tube main body (310), a plurality of electric thermal ceramic elements (322), and a plurality of insulation sheets (326), each of the electric thermal ceramic elements (322) being interposed between plate electrodes (321) of each of the plate electrode pairs, each of the insulation sheets (326) wrapping each of the plate electrode pairs (321) and each of the electric thermal ceramic elements (322), the two power cables (323, 325) supplying electrical current to each of the plate electrode pairs (321).

10. The fuel tube contained automobile fuel pretreatment device (300) according to claim 8, wherein the magnetization combustion-enhancing device (4) comprises two first-layer clips (41) that are jointed to each other to circumferentially enclose an outside circumference of the tube main body and two permanent magnets (421, 422), which are retained through magnetic attraction on inside surfaces of the two first-layer clips (41) at locations adjacent to the outside surfaces (3151) of the tube main body (310).

11. The fuel tube contained automobile fuel pretreatment device (300) according to claim 10, wherein the two first-layer clips (41) are of a U-shape and have openings facing each other, the two permanent magnets (421, 422) being retained through magnetic attraction on jointing interfaces between the two first-layer clips 941), spaced positioning bumps (412) being formed on the inside surfaces of each of the first-layer clips (41) for engaging and supporting the permanent magnets (421, 422).

12. The fuel tube contained automobile fuel pretreatment device (300) according to claim 10, wherein the two first-layer clips (41) are of a U-shape and have openings facing each other, the magnetization combustion-enhancing device (4) comprising two receptacles (43) having a bowl-shape and forming openings facing each other for receiving and holding the two permanent magnets (421, 422) therein, spaced positioning bumps (412) being formed on inside surfaces of each of the first-layer clips (41) for engaging and supporting the receptacles (43), the two permanent magnets (421, 422) being retained through magnetic attraction on the jointing interfaces between the two first-layer clips (41) with the two receptacles (43).

13. The fuel tube contained automobile fuel pretreatment device (300) according to claim 12, wherein the magnetization combustion-enhancing device (4) further comprises two second-layer clips (44) positioned against inside surfaces of the two first-layer clips (41), the two second-layer clips (44) being of a U-shape and engaging outside surfaces of the two receptacles (43).
